**Europäisches Patentamt**

**European Patent Office**

**Office européen des brevets**

(19)

(11) Numéro de publication : **0 407 234 B1**

(12)

# FASCICULE DE BREVET EUROPEEN

(45) Date de publication du fascicule du brevet :
**22.07.92 Bulletin 92/30**

(51) Int. Cl.⁵ : **F16D 65/56,** F16D 65/46,
F16D 55/02, F16D 55/226

(21) Numéro de dépôt : **90401454.5**

(22) Date de dépôt : **31.05.90**

(54) **Frein à disque.**

(30) Priorité : **03.07.89 FR 8908868**

(43) Date de publication de la demande :
**09.01.91 Bulletin 91/02**

(45) Mention de la délivrance du brevet :
**22.07.92 Bulletin 92/30**

(84) Etats contractants désignés :
**DE ES FR GB IT**

(56) Documents cités :
**EP-A- 0 186 537**
**EP-A- 0 349 368**

(73) Titulaire : **BENDIX EUROPE Services**
**Techniques S.A.**
**126 rue de Stalingrad**
**F-93700 Drancy (FR)**

(72) Inventeur : **Monteillet, Jean-Claude, Bendix**
**Europe**
**Services Techniques, 126 rue de Stalingrad**
**F-93700 Drancy (FR)**

EP 0 407 234 B1

Jouve, 18, rue Saint-Denis, 75001 PARIS

## Description

La présente invention est relative à un frein à disque notamment destiné à équiper les véhicules poids lourds.

Dans EP-A-0 186 537 est décrit un frein à disque comprenant un disque rotatif, un étrier monté sur un support fixe de façon à chevaucher le disque et à pouvoir se déplacer perpendiculairement au plan de ce dernier, et portant deux éléments de friction situés de part et d'autre du disque, un premier de ces éléments étant en appui sur l'étrier, et le second élément étant en appui, par l'intermédiaire d'une contreplaque rigide, sur un poussoir fileté, lui-même vissé dans une pièce montée sur l'étrier de façon à pouvoir coulisser perpendiculairement au plan du disque par rapport à l'étrier sous l'action du moyen moteur, tel qu'un vérin, le poussoir comportant une tête non circulaire, qui coopère avec un organe de retenue, de forme adaptée à cette tête, et qui empêche une rotation non désirée de la tête, et par conséquent, un vissage ou un dévissage du poussoir.

Selon ce document, la tête du poussoir est de forme hexagonale, et l'organe de retenue a la forme d'une fourche à deux dents qui viennent en contact avec une ou deux faces opposées de la tête. La tige de l'organe de retenue est immobilisée par une vis montée dans la contreplaque du second élément de friction, et qui traverse un trou de la tige de l'organe de retenue. Lorsqu'on veut changer les éléments de friction, pour en mettre d'autres d'épaisseur différente, par exemple à cause de l'usure, on enlève ladite vis, et l'organe de retenue peut être utilisé pour visser ou dévisser le poussoir à la façon d'une clef plate communément utilisée.

Cette disposition est utilisée en combinaison avec un dispositif de rattrapage automatique d'usure qui a pour effet de compenser les variations d'épaisseur des éléments de friction dues à l'usure.

Ce système donne dans l'ensemble satisfaction. Toutefois, on sait que le réglage initial du dispositif de rattrapage automatique d'usure demande souvent une grande précision qu'il est difficile d'obtenir avec un poussoir dont la tête affecte une forme hexagonale.

En outre, on sait que, lors du freinage, les éléments de friction se meuvent légèrement dans le sens de la rotation du disque. L'organe de retenue, qui est fixé à une de ses extrémités à la contreplaque solidaire de l'un des éléments de friction, et à l'autre extrémité au poussoir, subit alors des efforts très importants tendant à le déformer gravement et à l'user prématurément.

La présente invention a donc pour but un frein à disque qui ne présente pas ces inconvénients, et qui, tout en étant d'un prix de revient faible, possède une plus grande durée de vie.

Pour atteindre ce but, selon l'invention, la tête du poussoir affecte la forme d'une roue crénelée et un moyen élastique précontraint solidaire de l'étrier force un élément en saillie de l'organe de retenue à coopérer avec au moins un créneau de la roue.

De préférence, ce moyen élastique est le ressort de maintien des éléments de friction.

Différents modes de réalisation de l'invention font l'objet des sous-revendications. Parmi ceux-ci, selon un premier mode, le moyen élastique est conformé de manière à constituer également l'organe de retenue.

Selon un deuxième mode, l'organe de retenue est constitué par une plaque percée d'un orifice oblong dans lequel s'engage l'extrémité du poussoir, une première patte en saillie solidaire de la plaque engrènant dans un créneau de la roue sous l'effet du moyen élastique lorsque le poussoir est en contact avec une extrémité de l'orifice oblong.

L'invention sera mieux comprise et d'autres buts, avantages et caractéristiques de celle-ci apparaîtront plus clairement à la lecture de la description qui suit d'exemples pratiques de réalisation donnés à titre non limitatif, et à laquelle une planche de dessins est jointe sur laquelle :

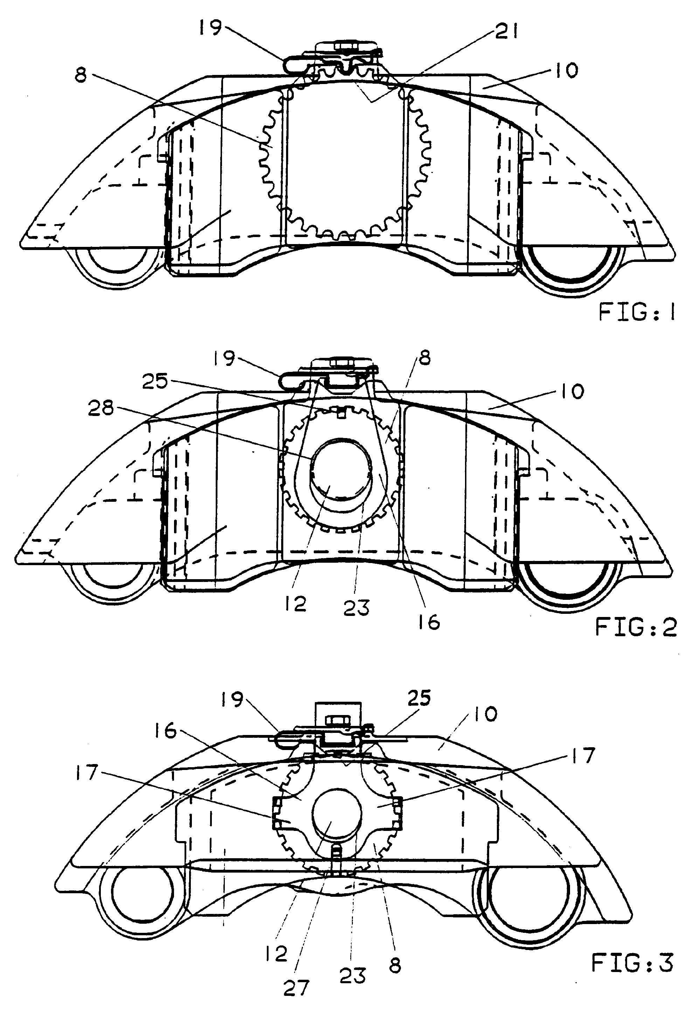

Les Figures 1, 2 et 3 sont trois vues similaires d'un frein à disque selon l'invention, prises dans le plan du disque, respectivement pour trois modes de réalisation préférés.

On n'a pas représenté ici le frein dans son ensemble car on le considère bien connu de l'homme du métier. Celui-ci pourra en trouver une description plus complète dans le document précité, étant entendu que seule la partie relative au blocage du poussoir sera décrite ici.

En référence maintenant aux Figures, l'étrier 10 enjambe le disque de frein (non représenté). Un ressort 19, en forme de lame, est placé en travers d'un évidement prévu au-dessus de l'étrier, de façon à être démontable, et assure le maintien des éléments de friction et de la contreplaque, notamment pour éviter certains bruits parasites lors du fonctionnement du frein.

Le dispositif de rattrapage automatique de l'usure des éléments de friction comporte un poussoir 12 dont l'extrémité est pourvue d'une tête 8 affectant la forme d'une roue crénelée. Cette roue crénelée est, de préférence, une pièce rapportée sur l'extrémité du poussoir et, de préférence encore, affecte la forme d'un disque annulaire crénelé fretté sur l'extrémité du poussoir.

Dans un exemple de réalisation, on comptait 32 créneaux sur la roue de manière à obtenir la précision souhaitée. Bien évidemment, le nombre de créneaux est indépendant de la présente invention.

Comme indiqué précédemment, un organe de retenue 16 bloque la roue crénelée en rotation. Pour ce faire, un élément en saillie de l'organe de retenue coopère avec un créneau, un moyen élastique tel que le ressort de maintien 19 des éléments de friction, appliquant la force appropriée pour que l'élément en saillie ne s'échappe pas du créneau lors du freinage.

En référence maintenant plus particulièrement à la Figure 1, l'organe de retenue et le ressort précité ne forment qu'une seule pièce 19, le ressort étant alors conformé pour présenter une partie en saillie 21 pouvant coopérer avec un créneau de la roue 8.

En référence maintenant aux Figures 2 et 3, l'organe de retenue 16 est constitué par une plaque percée d'un orifice oblong 23 dans lequel s'engage l'extrémité du poussoir 12, et est pourvu d'une patte faisant saillie 25 engrènant dans un créneau de la roue 8 sous l'effet de la pression exercée par le ressort 19. Les dimensions de l'orifice oblong sont telles que la patte 25 engrène bien dans le créneau lorsque l'organe de retenue 16 est en butée contre l'extrémité du poussoir 12 sous l'effet du ressort 19, et que la patte 25 soit totalement hors du créneau lorsque l'on pousse la plaque à l'encontre de l'effet du ressort, de manière à ajuster la position angulaire de la roue lors du montage du frein.

Pour assurer un bon équilibre stable du système, la patte faisant saillie 25, la force exercée par le ressort 19 et l'axe du poussoir 12 sont dans le même plan, de même que le grand axe de l'orifice oblong 23.

Dans l'exemple illustré Figure 2, une gorge 28 a été pratiquée à la périphérie du poussoir 12 pour accueillir le bord intérieur de l'organe de retenue 16, de manière que le poussoir 12 et l'organe de retenue 16 puissent se mouvoir en translation ensemble.

Dans l'exemple représenté Figure 3, dans le même but, l'élément de retenue 16 comporte deux bras 17 repliés entièrement pour former un logement prévu pour recevoir la périphérie de la roue crénelée 8. Dans ce cas, bien sûr, il est inutile de prévoir la gorge 28 du mode de réalisation représenté Figure 2.

On a également représenté Figure 3 un moyen n'autorisant qu'un mouvement de translation verticale de l'organe de retenue 16. Ce moyen pourrait également être mis en oeuvre dans le mode de réalisation illustré Figure 2. Il est constitué par une rainure pratiquée dans la contreplaque dans laquelle s'engage un ergot 27 faisant saillie de l'organe de retenue 16 et solidaire de ce dernier. Pour obtenir l'effet souhaité le meilleur, la rainure, l'axe du poussoir 12 et la patte 25 sont dans un même plan.

Bien évidemment, l'homme du métier pourra apporter de nombreuses modifications à la présente invention sans sortir de son cadre tel que défini par les revendications jointes. Notamment, on pourra prévoir d'utiliser deux ou plusieurs pattes 25 engrènant dans les créneaux de la roue crénelée 8. On pourra également mettre en oeuvre deux ou plusieurs ergots 25 coulissant dans les rainures parallèles pratiquées dans la contreplaque. En outre, un moyen élastique autre que le ressort de maintien 19 pourra être utilisé, en particulier, la pièce de support et de fixation du ressort de maintien 19 peut être conformée pour constituer un moyen élastique indépendant approprié.

L'homme du métier aura compris que, grâce à l'invention, la rotation du poussoir 12 lors d'un freinage reste impossible, tandis qu'un réglage angulaire de ce poussoir est aisé lors du montage du frein. Enfin, le poussoir 12 ne reçoit pas d'efforts importants lors du freinage et le dispositif de rattrapage automatique d'usure présente, par suite, une plus longue durée de vie.

**Revendications**

1. Frein à disque, comprenant un disque rotatif, un étrier (10) chevauchant le disque, monté sur un support fixe de façon à pouvoir se déplacer perpendiculairement au plan du disque, et portant deux éléments de friction situés de part et d'autre du disque et dont le premier est en appui sur l'étrier et le deuxième est en appui, par exemple par l'intermédiaire d'une contreplaque rigide, sur un poussoir fileté (12), vissé lui-même dans une pièce montée de façon à constituer un dispositif de rattrapage automatique d'usure et présentant une tête (8) qui coopère avec un organe de retenue (16) de forme adaptée à cette tête, pour interdire toute rotation de ladite tête, caractérisé en ce que ladite tête (8) affecte la forme d'une roue crénelée et qu'un moyen élastique précontraint (19) solidaire de l'étrier (10) force un élément en saillie (21, 25) dudit organe de retenue (16) à coopérer avec au moins un créneau de ladite roue (8).

2. Frein à disque selon la revendication 1 caractérisé en ce que ledit moyen élastique (19) est le ressort de maintien desdits éléments de friction.

3. Frein à disque selon la revendication 1 caractérisé en que ledit moyen élastique est constitué par la pièce de support et de fixation du ressort de maintien desdits éléments de friction.

4. Frein à disque selon l'une quelconque des revendications 1 à 3 caractérisé en ce que ladite tête (8) est constituée par un disque annulaire crénelé rapporté sur l'extrémité dudit poussoir.

5. Frein à disque selon l'une quelconque des revendications 1 à 4 caractérisé en ce que ledit moyen élastique (19) est conformé de manière à constituer également ledit organe de retenue.

6. Frein à disque selon l'une quelconque des revendications 1 à 4 caractérisé en ce que ledit organe de retenue (16) est constitué par une plaque percée d'un orifice oblong (23) dans lequel s'engage l'extrémité dudit poussoir (12), une patte (25) faisant saillie et étant solidaire de ladite plaque (16) engrènant dans un créneau de ladite roue (8) sous l'effet dudit moyen élastique (19) qui met ledit poussoir (12) en contact avec une extrémité dudit orifice oblong (23).

7. Frein à disque selon la revendication 6 caractérisé en ce que l'axe dudit poussoir (12), ladite patte en saillie (25), et la force résultant dudit moyen élastique sont dans le même plan.

8. Frein à disque selon la revendication 6 ou 7 caractérisé en ce qu'une gorge (28) est pratiquée à la périphérie de l'extrémité dudit poussoir (12), ladite plaque (16) étant engagée dans ladite gorge (28) par son orifice oblong (23) lorsque ladite patte (25) engrène dans un desdits créneaux.

9. Frein à disque selon la revendication 6 ou 7 caractérisé en ce que les bords (17) de ladite plaque (16) sont au moins partiellement repliés pour former un logement prévu pour recevoir la périphérie de ladite roue crénelée (8).

10. Frein à disque selon l'une quelconque des revendications 6 à 9 caractérisé en ce que ledit organe de retenue (16) coopère avec ladite contreplaque pour n'autoriser qu'un mouvement de translation verticale dudit organe de retenue (16).

11. Frein à disque selon la revendication 10 caractérisé en ce que ladite contreplaque comporte au moins une rainure dans laquelle s'engage un ergot (27) faisant saillie dudit organe de retenue (16) et solidaire de ce dernier.

**Patentansprüche**

1. Scheibenbremse, mit einer drehbaren Scheibe, einem die Scheibe übergreifenden Bremssattel (10), der an einem festen Träger so angebracht ist, daß er senkrecht zur Ebene der Scheibe verschoben werden kann, und der zwei auf beiden Seiten der Scheibe befindliche Reibungselemente trägt, von denen sich das erste am Bremssattel und das zweite beispielsweise über eine dazwischen eingesetzte starre Gegenplatte an einem mit einem Gewinde versehenen Stößel (12) abstützt, der seinerseits in ein Teil eingeschraubt ist, das so angebracht ist, daß es eine selbstnachstellende Verschleiß-Einrichtung bildet, und einen Kopf (8) aufweist, der mit einem Rückhalteelement mit an diesen Kopf angepaßter Form zusammenwirkt, um jegliche Drehung des Kopfes zu verhindern, dadurch gekennzeichnet, daß der Kopf (8) die Form eines gezahnten Rades aufweist und daß ein mit dem Bremssattel (10) verbundenes, elastisches Vorspannmittel (19) ein vom Rückhalteelement (16) vorstehendes Element (21, 25) dazu zwingt, mit wenigstens einem Zahn des Rades (8) zusammenzuwirken.

2. Scheibenbremse gemäß Anspruch 1, dadurch gekennzeichnet, daß das elastische Mittel (19) die Haltefeder der Reibungselemente ist.

3. Scheibenbremse gemäß Anspruch 1, dadurch gekennzeichnet, daß das elastische Mittel von dem Halte- und Befestigungsteil der Haltefeder der Reibungselemente gebildet wird.

4. Scheibenbremse gemäß einem der Ansprüche 1 bis 3, dadurch gekennzeichnet, daß der Kopf (8) von einer ringförmigen gezahnten Scheibe gebildet ist, die an das Ende des Stößels angesetzt ist.

5. Scheibenbremse gemäß einem der Ansprüche 1 bis 4, dadurch gekennzeichnet, daß das elastische Mittel (19) so beschaffen ist, daß es gleichermaßen das Rückhalteelement bildet.

6. Scheibenbremse gemäß einem der Ansprüche 1 bis 4, dadurch gekennzeichnet, daß das Rückhalteelement (16) von einer Platte gebildet ist, die von einer länglichen Öffnung (23) durchsetzt ist, in die das Ende des Stößels (12) eingreift, wobei ein Haken (25) von der Platte (16) vorsteht, mit dieser verbunden ist und unter der Wirkung des elastischen Mittels (19), die den Stößel (12) mit einem Ende der länglichen Öffnung (23) in Kontakt bringt, in eine Zahnung des Rades (8) eingreift.

7. Scheibenbremse gemäß Anspruch 6, dadurch gekennzeichnet, daß die Mittelachse des Stößels (12), der vorspringende Haken (25) und die von den elastischen Mitteln ausgehende Kraft in derselben Ebene liegen.

8. Scheibenbremse gemäß Anspruch 6 oder 7, dadurch gekennzeichnet, daß in dem Umfang des Endes des Stößels (12) eine Vertiefung (28) ausgebildet ist, wobei die Platte (16) mittels ihrer länglichen Öffnung (23) in die Vertiefung (28) eingreift, wenn der Haken in eine der Zahnungen eingreift.

9. Scheibenbremse gemäß Anspruch 6 oder 7, dadurch gekennzeichnet, daß die Ränder (17) der Platte (16) wenigstens teilweise umgebogen sind, um einen Sitz zu bilden, der für die Aufnahme der Umfangslinie des gezahnten Rades (8) vorgesehen ist.

10. Scheibenbremse gemäß einem der Ansprüche 6 bis 9, dadurch gekennzeichnet, daß das Rückhalteelement (16) mit der Gegenplatte zusammenwirkt, um eine vertikale Verschiebungsbewegung des Rückhalteelementes (16) nicht zuzulassen.

11. Scheibenbremse gemäß Anspruch 10, dadurch gekennzeichnet, daß die Gegenplatte wenigstens eine Nut aufweist, in die eine vom Rückhalteelement (16) vorspringende und mit diesem verbundene Nase (27) eingreift.

**Claims**

1. Disc brake comprising a rotary disc and a calliper (10) straddling the disc, mounted on a stationary support so as to be movable perpendicularly relative to the plane of the disc and carrying two friction elements which are arranged on either side of the disc and of which the first bears on the calliper and the second bears, for example by means of a rigid counterplate, on a threaded pusher (12), itself screwed in a piece mounted so as to form a device for the automatic compensation of wear and having a head (8) interacting with a retention member (16) of form matched to this head, in order to prevent any rotation of said head, characterized in that said head (8) assumes the form of a notched wheel, and in that a prestressed elastic means (19) fixed to the calliper (10) forces a projecting element (21, 25) of said retention member (16) to interact with at least one notch of said wheel (8).

2. Disc brake according to claim 1, characterized in that said elastic means (19) is the spring holding said friction elements.

3. Disc brake according to claim 1, characterized in that said elastic means is composed of the supporting and fastening piece of the spring holding said friction elements.

4. Disc brake according to any of claims 1 to 3, characterized in that said head (8) is composed of a notched annular disc attached to the end of said pusher.

5. Disc brake according to any of claims 1 to 4, characterized in that said elastic means (19) is shaped so as also to form said retention member.

6. Disc brake according to any of claims 1 to 4, characterized in that said retention member (16) is composed of a plate pierced with an oblong orifice (23), in which the end of said pusher (12) engages, a projecting tab (25) fixed to said plate (16) meshing with a notch of said wheel (8) under the effect of said elastic means (19) which puts said pusher (12) in contact with one end of said oblong orifice (23).

7. Disc brake according to claim 6, characterized in that the axis of said pusher (12), said projecting tab (25) and the force resulting from said elastic means are in the same plane.

8. Disc brake according to claim 6 or 7, characterized in that a groove (28) is made on the periphery of the end of said pusher (12), said plate (16) being engaged in said groove (28) by means of its oblong orifice (23) when said tab (25) meshes with one of said notches.

9. Disc brake according to claim 6 or 7, characterized in that the edges (17) of said plate (16) are bent at least partially in order to form a receptacle intended for receiving the periphery of said notched wheel (8).

10. Disc brake according to any of claims 6 to 9, characterized in that said retention member (16) interacts with said counterplate so as to allow only a vertical translational movement of said retention member (16).

11. Disc brake according to claim 10, characterized in that said counterplate possesses at least one slot, into which engages a pin (27) projecting from said retention member (16) and fixed to the latter.

FIG:1

FIG:2

FIG:3